(19) Europäisches Patentamt / European Patent Office / Office européen des brevets

(11) **EP 3 901 099 A1**

(12) **EUROPEAN PATENT APPLICATION**
published in accordance with Art. 153(4) EPC

(43) Date of publication:
**27.10.2021 Bulletin 2021/43**

(21) Application number: **19898806.5**

(22) Date of filing: **20.12.2019**

(51) Int Cl.:
*C01G 53/00* (2006.01)   *H01M 4/36* (2006.01)
*H01M 4/505* (2010.01)   *H01M 4/525* (2010.01)

(86) International application number:
**PCT/JP2019/050015**

(87) International publication number:
**WO 2020/130123 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2018   JP 2018238844**
**08.05.2019   JP 2019088342**

(71) Applicant: **SUMITOMO CHEMICAL COMPANY LIMITED**
**Chuo-ku**
**Tokyo 104-8260 (JP)**

(72) Inventor: **KURODA Tomoya**
**Fukui-shi, Fukui 910-3131 (JP)**

(74) Representative: **Vossius & Partner**
**Patentanwälte Rechtsanwälte mbB**
**Siebertstraße 3**
**81675 München (DE)**

(54) **LITHIUM METAL COMPLEX OXIDE POWDER, POSITIVE ELECTRODE ACTIVE MATERIAL FOR LITHIUM SECONDARY BATTERIES, POSITIVE ELECTRODE FOR LITHIUM SECONDARY BATTERIES, AND LITHIUM SECONDARY BATTERY**

(57)    A lithium metal complex oxide powder satisfies requirements (1) to (3): Requirement (1): Composition Formula (I) is satisfied, $Li[Li_x(Ni_{(1-y-z-w)}Co_yMn_zM_w)_{1-x}]O_2$ ...(I) (where M is one or more elements selected from the group consisting of Fe, Cu, Ti, Mg, Al, W, B, Mo, Nb, Zn, Sn, Zr, Ga, La, and V, and $-0.1 \leq x \leq 0.2$, $0 \leq y \leq 0.4$, $0 \leq z \leq 0.4$, and $0 \leq w \leq 0.1$ are satisfied). Requirement (2): an average primary particle diameter is 1 $\mu$m or more and 7 $\mu$m or less. Requirement (3): R1/Ra, which is a ratio of the average primary particle diameter represented by R1 to an average crystallite diameter represented by Ra, is more than 5.0 and 20 or less.

FIG. 1A

FIG. 1B

EP 3 901 099 A1

**Description**

**[Technical Field]**

The present invention relates to a lithium metal complex oxide powder, a positive electrode active material for lithium secondary batteries, a positive electrode for lithium secondary batteries, and a lithium secondary battery.
Priority is claimed on Japanese Patent Application No. 2018-238844, filed on December 20, 2018, and Japanese Patent Application No. 2019-088342, filed on May 8, 2019, the contents of which are incorporated herein by reference.

**[Background Art]**

A lithium metal complex oxide has been used as a positive electrode active material for lithium secondary batteries. Lithium secondary batteries have been already in practical use not only for small power sources in mobile phone applications, notebook personal computer applications, and the like but also for medium-sized and large-sized power sources in automotive applications, power storage applications, and the like.
Various attempts have been made to improve the battery characteristics of a lithium secondary battery such as charge/discharge characteristics. For example, Patent Document 1 describes a positive electrode active material composed of secondary particles formed by agglomerating a plurality of primary particles, in which the ratio of an average particle diameter to an average size of crystallites is 1.5 to 5.

**[Citation List]**

**[Patent Document]**

**[Patent Document 1]**
Japanese Unexamined Patent Application, First Publication No. 2014-149962

**[Summary of Invention]**

**[Technical Problem]**

As the application field of lithium secondary batteries advances, the positive electrode active material of lithium secondary batteries requires a further improvement in charge/discharge characteristics.
The present invention has been made in view of the above circumstances, and an object thereof is to provide a lithium metal complex oxide powder having high initial charge/discharge efficiency in a case of being used as a positive electrode active material for lithium secondary batteries, a positive electrode active material for lithium secondary batteries, a positive electrode for lithium secondary batteries, and a lithium secondary battery.

**[Solution to Problem]**

That is, the present invention includes the inventions of the following [1] to [8].

[1] A lithium metal complex oxide powder satisfying requirements (1) to (3):

the requirement (1): Composition Formula (I) is satisfied;

$$Li[Li_x(Ni_{(1-y-z-w)}Co_yMn_zM_w)_{1-x}]O_2 \ldots \qquad (I)$$

(where M is one or more elements selected from the group consisting of Fe, Cu, Ti, Mg, Al, W, B, Mo, Nb, Zn, Sn, Zr, Ga, La, and V, and $-0.1 \leq x \leq 0.2$, $0 \leq y \leq 0.4$, $0 \leq z \leq 0.4$, and $0 \leq w \leq 0.1$ are satisfied)
the requirement (2): an average primary particle diameter is 1 $\mu$m or more and 7 $\mu$m or less; and
the requirement (3): R1/Ra, which is a ratio of the average primary particle diameter represented by R1 to an average crystallite diameter represented by Ra, is more than 5.0 and 20 or less.

[2] The lithium metal complex oxide powder according to [1], in which a BET specific surface area of the lithium metal complex oxide powder is 0.1 $m^2$/g or more and 2.0 $m^2$/g or less.
[3] The lithium metal complex oxide powder according to [1] or [2], in which a 10% cumulative volume particle size $D_{10}$ of the lithium metal complex oxide powder is 4 $\mu$m or less.

[4] The lithium metal complex oxide powder according to any one of [1] to [3], in which an amount of residual lithium measured by a neutralization titration method is 0.3 mass% or less.

[5] The lithium metal complex oxide powder according to any one of [1] to [4], including: core particles; and a coating material that coats a surface of the core particles, in which the coating material contains an element X, where the element X is one or more elements selected from the group consisting of Al, Ti, Zr, La, Nb, and W.

[6] A positive electrode active material for lithium secondary batteries, including: the lithium metal complex oxide powder according to any one of [1] to [5].

[7] A positive electrode for lithium secondary batteries, including: the positive electrode active material for lithium secondary batteries according to [6].

[8] A lithium secondary battery comprising:
the positive electrode for lithium secondary batteries according to [7].

**[Advantageous Effects of Invention]**

According to the present invention, it is possible to provide a lithium metal complex oxide powder having high initial charge/discharge efficiency in a case of being used as a positive electrode active material for lithium secondary batteries, a positive electrode active material for lithium secondary batteries, a positive electrode for lithium secondary batteries, and a lithium secondary battery.

**[Brief Description of Drawings]**

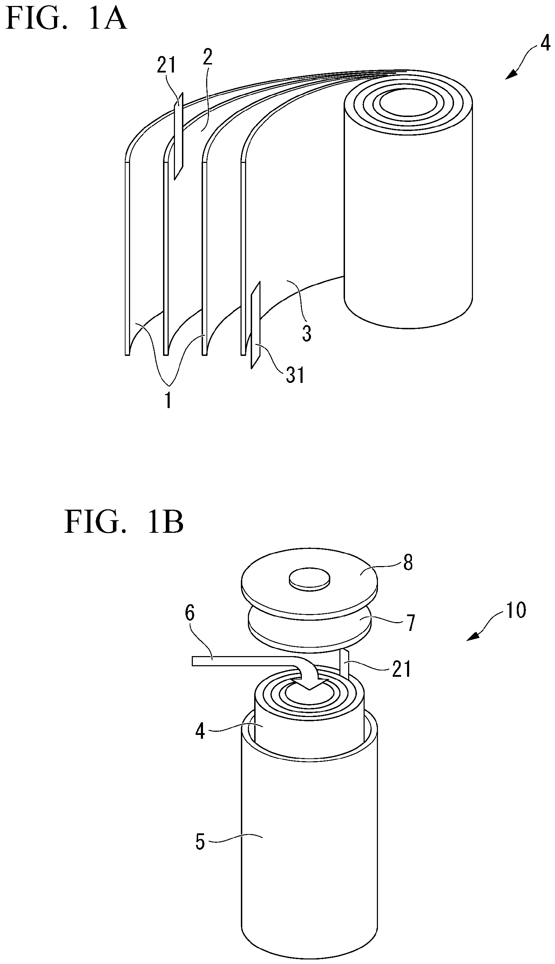

Fig. 1A is a schematic configuration view showing an example of a lithium-ion secondary battery.
Fig. 1B is a schematic configuration view showing an example of the lithium-ion secondary battery.

**[Description of Embodiments]**

<Lithium Metal Complex Oxide Powder>

A lithium metal complex oxide powder of the present embodiment is formed of only primary particles, or primary particles and secondary particles formed by agglomeration of the primary particles.

The "primary particles" mean particles having no grain boundary in appearance when observed in a visual field of 5,000 times or more and 20,000 times or less using a scanning electron microscope or the like.

The "secondary particles" are particles in which the primary particles are agglomerated. In other words, a "secondary particle" is an agglomerate of primary particles.

In an aspect of the present invention, the lithium metal complex oxide powder is composed of only primary particles.

In another aspect of the present invention, the lithium metal complex oxide powder is composed of secondary particles that are agglomerates of primary particles and primary particles that are present independently of the secondary particles.

In a case of being composed of secondary particles that are agglomerates of primary particles and primary particles that are present independently of the secondary particles, the ratio of the number of primary particles to the sum of the number of secondary particles and the number of primary particles contained in the lithium metal complex oxide powder is preferably 20% or more, more preferably 30% or more, and particularly preferably 50% or more. The upper limit thereof is not particularly limited, but is less than 100%, and preferably 90% or less.

When calculating the number of primary particles, the primary particles that constitute the secondary particles are not counted, but only the number of primary particles that are present independently of the secondary particles is counted.

In the present embodiment, the ratio of the number of primary particles to the sum of the number of secondary particles and the number of primary particles contained in the lithium metal complex oxide is determined by the following method.

First, the lithium metal complex oxide is placed on a conductive sheet attached onto a sample stage, and the primary particles and the secondary particles that are agglomerates of the primary particles are dispersed so as to be present independently without contacting each other.

Thereafter, using a scanning electron microscope (SEM, for example, JSM-5510 manufactured by JEOL Ltd.), SEM observation is performed by irradiation with an electron beam having an acceleration voltage of 20 kV.

Next, 200 particles are randomly extracted from an image (SEM photograph) obtained by the SEM observation, and used as the sum of the number of secondary particles and the number of primary particles.

Next, the number of primary particles contained in the extracted 200 particles and present independently of the secondary particles is calculated.

By dividing the obtained number of primary particles by the sum of the number of secondary particles and the number of primary particles, the ratio of the number of primary particles to the sum of the number of secondary particles and the number of primary particles is calculated.

The magnification of the SEM photograph may be set such that a photograph having a magnification that can specify the particle morphology of the target lithium metal complex oxide can be obtained, and a magnification of 1,000 times or more and 30,000 times or less is preferably used.

The lithium metal complex oxide powder of the present embodiment satisfies the following requirements (1) to (3).

Requirement (1): Composition Formula (I) is satisfied.

$$Li[Li_x(Ni_{(1-y-z-w)}Co_yMn_zM_w)_{1-x}]O_2 ... \qquad (I)$$

(where M is one or more elements selected from the group consisting of Fe, Cu, Ti, Mg, Al, W, B, Mo, Nb, Zn, Sn, Zr, Ga, La, and V, and $-0.1 \leq x \leq 0.2$, $0 \leq y \leq 0.4$, $0 \leq z \leq 0.4$, and $0 \leq w \leq 0.1$ are satisfied)

the requirement (2): an average primary particle diameter is 1 $\mu$m or more and 7 $\mu$m or less; and

Requirement (3): The ratio (R1/Ra) of the average primary particle diameter (R1) to an average crystallite diameter (Ra) is more than 5.0 and 20 or less.

By using the lithium metal complex oxide powder of the present embodiment, it is possible to provide a positive electrode having high initial charge/discharge efficiency.

The initial charge/discharge efficiency refers to the charge/discharge efficiency during initial charging and discharging after a battery is assembled.

The charge/discharge efficiency (%) is calculated by the following expression.

$$\text{Charge/discharge efficiency (\%)} = \text{discharge capacity / charge capacity} \times 100$$

The lithium metal complex oxide powder of the present embodiment satisfies the requirement (1).

«Requirement (1)»

From the viewpoint of obtaining a lithium secondary battery having high cycle characteristics, x in Composition Formula (I) is preferably 0 or more, more preferably more than 0, even more preferably 0.01 or more, and particularly preferably 0.02 or more. In addition, from the viewpoint of obtaining a lithium secondary battery having higher initial charge/discharge efficiency, x in Composition Formula (I) is preferably 0.2 or less, more preferably 0.1 or less, even more preferably 0.08 or less, and particularly preferably 0.06 or less.

The upper limit and the lower limit of x can be randomly combined.

Examples of the combination include x of 0 or more and 0.2 or less, more than 0 and 0.1 or less, 0.01 or more and 0.08 or less, and 0.02 or more and 0.06 or less.

In the present specification, the "cycle characteristics" mean characteristics in which the battery capacity decreases due to repeated charging and discharging, and mean a capacity ratio at the time of remeasurement to the initial capacity.

In addition, from the viewpoint of obtaining a lithium secondary battery having low battery internal resistance, y in Composition Formula (I) is preferably 0 or more, more preferably 0.005 or more, even more preferably 0.01 or more, and particularly preferably 0.05 or more. In addition, from the viewpoint of obtaining a lithium secondary battery having high thermal stability, y in Composition Formula (I) is preferably 0.4 or less, more preferably 0.35 or less, even more preferably 0.33 or less, and particularly preferably 0.30 or less.

The upper limit and the lower limit of y can be randomly combined.

Examples of the combination include y of 0 or more and 0.4 or less, 0.005 or more and 0.35 or less, 0.01 or more and 0.33 or less, and 0.05 or more and 0.30 or less.

In addition, from the viewpoint of obtaining a lithium secondary battery having high cycle characteristics, z in Composition Formula (I) is preferably 0 or more, more preferably 0.01 or more, even more preferably 0.02 or more, and particularly preferably 0.1 or more. In addition, from the viewpoint of obtaining a lithium secondary battery having high storage stability at high temperatures (for example, in an environment at 60°C), z in Composition Formula (I) is preferably 0.4 or less, more preferably 0.39 or less, even more preferably 0.38 or less, and particularly preferably 0.35 or less.

The upper limit and the lower limit of z can be randomly combined.

Examples of the combination include z of 0 or more and 0.4 or less, 0.01 or more and 0.39 or less, 0.02 or more and 0.38 or less, and 0.1 or more and 0.35 or less.

M in Composition Formula (I) represents one or more elements selected from the group consisting of Fe, Cu, Ti, Mg, Al, W, B, Mo, Nb, Zn, Sn, Zr, Ga, La, and V.

In a case where the lithium metal complex oxide powder contains these elements, a positive electrode having low internal resistance and excellent initial charge/discharge efficiency can be manufactured.

In addition, M in Composition Formula (I) is preferably one or more elements selected from the group consisting of Ti, Mg, Al, W, B, and Zr from the viewpoint of obtaining a lithium secondary battery having high cycle characteristics, and is preferably one or more elements selected from the group consisting of Al, W, B, and Zr from the viewpoint of obtaining a lithium secondary battery having high thermal stability.

In addition, from the viewpoint of obtaining a lithium secondary battery having low battery internal resistance, w in Composition Formula (I) is preferably 0 or more, more preferably more than 0, even more preferably 0.0005 or more, and particularly preferably 0.001 or more. In addition, from the viewpoint of obtaining a lithium secondary battery having a high discharge capacity at a high current rate, w in Composition Formula (I) is preferably 0.1 or less, more preferably 0.09 or less, even more preferably 0.08 or less, and particularly preferably 0.07 or less.

The upper limit and the lower limit of w can be randomly combined.

Examples of the combination include w of 0 or more and 0.1 or less, more than 0 and 0.09 or less, 0.0005 or more and 0.08 or less, and 0.001 or more and 0.07 or less.

The compositional analysis of the lithium metal complex oxide powder is performed using an inductively coupled plasma emission spectrometer after dissolving the lithium metal complex oxide powder in hydrochloric acid.

As the inductively coupled plasma emission spectrometer, for example, SPS 3000 manufactured by SII Nano Technology Inc. can be used.

The lithium metal complex oxide powder of the present embodiment satisfies the requirement (2).

«Requirement (2)»

The average primary particle diameter (R1) is 1 $\mu$m or more, preferably 1.1 $\mu$m or more, more preferably 1.2 $\mu$m or more, and particularly preferably 1.3 $\mu$m or more.

The average primary particle diameter (R1) is 7 $\mu$m or less, preferably 6.5 $\mu$m or less, more preferably 6.0 $\mu$m or less, and particularly preferably 5.5 $\mu$m or less.

The upper limit and the lower limit of the average primary particle diameter can be randomly combined.

Examples of the combination include an average primary particle diameter (R1) of 1.1 $\mu$m or more and 6.5 $\mu$m or less, 1.2 $\mu$m or more and 6.0 $\mu$m or less, and 1.3 $\mu$m or more and 5.5 $\mu$m or less.

When the average primary particle diameter (R1) is equal to or more than the lower limit (that is, 1 $\mu$m or more), primary particles having an appropriately large particle diameter are present. When the average primary particle diameter (R1) is equal to or less than the upper limit (that is, 7 $\mu$m or less), there are few coarse primary particles that are excessively grown. The lithium metal complex oxide powder satisfying the requirement (2) can shorten the lithium ion diffusion path in the primary particles and increase the reaction rate. By using such a lithium metal complex oxide powder, a positive electrode having low resistance can be manufactured. Such a positive electrode is excellent in initial charge/discharge efficiency.

In the present embodiment, the average primary particle diameter (R1) is calculated by the following method.

First, the lithium metal complex oxide powder is placed on a conductive sheet attached onto a sample stage, and irradiated with an electron beam having an acceleration voltage of 20 kV using a scanning electron microscope for SEM observation. 50 primary particles are randomly extracted from an image (SEM photograph) obtained by the SEM observation, and for each of the primary particles, the distance (unidirectional diameter) between parallel lines sandwiched between the parallel lines drawn on a projected image of the primary particles in a certain direction is measured as the particle diameter of the primary particle. The arithmetic average value of the obtained particle diameters of the primary particles is taken as the average primary particle diameter of the lithium metal complex oxide powder.

As the scanning electron microscope (SEM), for example, JSM-5510 manufactured by JEOL Ltd. can be used.

The lithium metal complex oxide powder of the present embodiment satisfies the requirement (3).

«Requirement (3)»

The ratio (R1/Ra) of the average primary particle diameter (R1) to the average crystallite diameter (Ra) is more than 5.0, preferably 5.1 or more, more preferably 5.2 or more, and particularly preferably 5.3 or more.

The ratio (R1/Ra) of the average primary particle diameter (R1) to the average crystallite diameter (Ra) is 20 or less, preferably 19 or less, more preferably 18 or less, and particularly preferably 17 or less.

The upper limit and the lower limit thereof can be randomly combined.

Examples of the combination include a ratio (R1/Ra) of 5.1 or more and 19 or less, 5.2 or more and 18 or less, and 5.3 or more and 17 or less.

In a case where the ratio (R1/Ra) is equal to or less than the lower limit (that is, 5.0 or less), the lithium metal complex oxide powder is in any of the following states (i) to (iii).

(i) The average primary particle diameter is too small.
(ii) The average crystallite diameter is excessive.
(iii) (i) and (ii) are satisfied.

In the lithium metal complex oxide powder in the state (i), the number of contact portions between the primary particles increases and the interface increases, so that the interface resistance between the primary particles tends to increase. The lithium metal complex oxide powder in the state (ii) has a long diffusion path of lithium ions during charging and discharging. Therefore, the resistance inside the primary particles tends to increase. The lithium metal complex oxide powder in the state (iii) has particularly high resistance for the reasons described above. In a lithium secondary battery using such a lithium metal complex oxide powder, the initial charge/discharge efficiency tends to decrease.

In a case where the ratio (R1/Ra) exceeds the upper limit (that is, 20), the lithium metal complex oxide powder is in any of the following states (iv) to (vi).

(iv) The average primary particle diameter is excessive.
(v) The average crystallite diameter is too small.
(vi) (iv) and (v) are satisfied.

The lithium metal complex oxide powder in the state (iv) has a small contact area with a conductive material or an electrolytic solution per weight of the lithium metal complex oxide powder. Therefore, the reaction area that can contribute to the desorption and insertion of lithium ions decreases, so that the resistance tends to increase. The lithium metal complex oxide powder in the state (v) has low crystallinity and low crystal purity of the lithium metal complex oxide particles, and contains an electrically inert crystal phase or an impurity phase having no crystallinity. Therefore, the lithium ions are not smoothly desorbed and inserted, and the resistance tends to increase. The lithium metal complex oxide powder in the state (vi) has particularly high resistance for the reasons described above, and the resistance inside the primary particles tends to increase. In a lithium secondary battery using such a lithium metal complex oxide powder, the initial charge/discharge efficiency tends to decrease.

The average crystallite diameter (Ra) of the lithium metal complex oxide powder means a crystallite diameter calculated by the Rietveld analysis method using a powder X-ray diffraction pattern obtained by powder X-ray diffraction measurement using CuK$\alpha$ radiation. Examples of analysis software for Rietveld analysis include TOPAS, Rietan, JANA, and JADE.

The lithium metal complex oxide powder of the present embodiment satisfying the requirements (1) to (3) has a large amount of primary particles having an appropriately large particle diameter. Since such a lithium metal complex oxide powder has few interfaces where the primary particles come into contact with each other, the diffusion path of lithium ions can be shortened. Accordingly, the electrical resistance when a positive electrode is manufactured can be suppressed. Therefore, a lithium battery manufactured by using the lithium metal complex oxide powder of the present embodiment has improved initial charge/discharge efficiency.

<<BET Specific Surface Area>>

The BET specific surface area of the lithium metal complex oxide powder of the present embodiment is preferably 0.1 m$^2$/g or more and 2.0 m$^2$/g or less, more preferably 0.2 m$^2$/g or more and 1.7 m$^2$/g or less, even more preferably 0.3 m$^2$/g or more and 1.5 m$^2$/g or less, and particularly preferably 0.4 m$^2$/g or more and 1.0 m$^2$/g or less.

The BET specific surface area can be measured by the following method.

After drying 1 g of the lithium metal complex oxide powder in a nitrogen atmosphere at 105°C for 30 minutes, the measurement is performed using a BET specific surface area measuring device.

As the BET specific surface area measuring device, for example, Macsorb (registered trademark) manufactured by MOUNTECH Co., Ltd. can be used.

<<$D_{10}$>>

The lithium metal complex oxide powder of the present embodiment has a 10% cumulative volume particle size $D_{10}$ of preferably 4 $\mu$m or less, more preferably 3.9 $\mu$m or less, even more preferably 3.8 $\mu$m or less, and particularly

preferably 3.5 μm or less.

The 10% cumulative volume particle size $D_{10}$ is preferably 0.5 μm or more, more preferably 1.0 μm or more, even more preferably 1.5 μm or more, and particularly preferably 2.0 μm or more.

The upper limit and the lower limit thereof can be randomly combined.

Examples of the combination include 0.5 μm or more and 4 μm or less, 1.0 μm or more and 3.9 μm or less, 1.5 μm or more and 3.8 μm or less, and 2.0 μm or more and 3.5 μm or less.

The cumulative volume particle size is measured by a laser diffraction scattering method.

First, 0.1 g of the lithium metal complex oxide powder is poured into 50 ml of 0.2 mass% sodium hexametaphosphate aqueous solution to obtain a dispersion liquid in which the powder is dispersed.

Next, the particle size distribution of the obtained dispersion liquid is measured using a laser diffraction scattering particle size distribution measuring device to obtain a volume-based cumulative particle size distribution curve.

In the obtained cumulative particle size distribution curve, the value of the particle diameter at a 10% cumulative point from the fine particle side is referred to as the 10% cumulative volume particle size $D_{10}$ (μm).

As the laser diffraction scattering particle size distribution measuring device, for example, Microtrac MT3300EXII manufactured by MicrotracBEL Corp. can be used.

When the 10% cumulative volume particle size $D_{10}$ is within the above range, primary particles having a large particle diameter are present. In this case, the interface between the primary particles is reduced. Therefore, a positive electrode having low resistance can be manufactured. Such a positive electrode is excellent in initial charge/discharge efficiency.

«Amount of Residual Lithium»

The amount of residual lithium of the lithium metal complex oxide powder of the present embodiment measured by a neutralization titration method is 0.3 mass% or less. The amount of residual lithium refers to the amount of Li element calculated from the total amount of lithium carbonate and lithium hydroxide contained in the residual alkali of the lithium metal complex oxide powder measured by neutralization titration.

From the viewpoint of obtaining a lithium secondary battery that generates less gas inside the battery, the amount of residual lithium is more preferably 0.2 mass% or less, and even more preferably 0.15 mass% or less.

The amount of residual lithium may be 0 mass%.

The amount of residual lithium is preferably 0 mass% or more and 0.2 mass% or less, and more preferably 0 mass% or more and 0.15 mass% or less.

The amount of residual lithium in the lithium metal complex oxide powder can be measured by the following method.

First, for example, 20 g of the lithium metal complex oxide powder and 100 g of pure water are put into a 100 ml beaker and stirred for five minutes. After stirring, the lithium metal complex oxide powder is filtered, 0.1 mol/L of hydrochloric acid is added dropwise to 60 g of the remaining filtrate, and the pH of the filtrate is measured with a pH meter. The measurement temperature may be, for example, 40°C.

The titration amount of hydrochloric acid at pH = 8.3 ± 0.1 is referred to as A ml, the titration amount of hydrochloric acid at pH = 4.5 ± 0.1 is referred to as B ml, and the concentrations of lithium carbonate and lithium hydroxide remaining in the lithium metal complex oxide powder are calculated from the following calculation expression. In the following expression, the molecular weights of lithium carbonate and lithium hydroxide are calculated by setting each atomic weight to H: 1.000, Li: 6.941, C: 12, and O: 16.

$$\text{Lithium carbonate concentration (mass\%)} =$$

$$\{0.1 \times (B - A) / 1000\} \times \{73.882 / (20 \times 60 / 100)\} \times 100$$

$$\text{Lithium hydroxide concentration (mass\%)} =$$

$$\{0.1 \times (2A - B) / 1000\} \times \{23.941 / (20 \times 60 / 100)\} \times 100$$

From the lithium carbonate concentration and the lithium hydroxide concentration calculated by the above expression, the amount of Li element remaining in the lithium metal complex oxide powder, that is, the residual lithium concentration is calculated by the following calculation expression.

$$\text{Residual lithium concentration (mass\%)} =$$

$$\text{Lithium carbonate concentration} \times 2 \times 6.941 / 73.882 + \text{lithium hydroxide}$$

$$\text{concentration} \times 6.941 / 23.941$$

«Coating Material»

The lithium metal complex oxide powder of the present embodiment preferably includes core particles and a coating material that coats the surface of the core particles. The coating material is preferably a coating layer or coating particles.

In the lithium metal complex oxide powder of the present embodiment, the element represented by M may constitute the core particles or the coating material, and may also constitute both the core particles and the coating material.

Among the elements represented by M, the element constituting the coating material is described as an element X. The element X is preferably one or more selected from Al, Ti, Zr, La, Nb, and W, and more preferably one or more selected from Al, Zr, Nb, and W. The coating material preferably contains a lithium-containing complex oxide of Li and the element X.

The element M and the element X may be the same or different from each other. From the viewpoint of efficient manufacturing, it is preferable that the element M and the element X are the same.

From the viewpoint of enhancing the effect of the present invention, the ratio (X / (Ni + Co + Mn + M)) of the molar ratio of the element X contained in the coating material to the sum of the molar ratios of Ni, Co, Mn, and M in the lithium metal complex oxide powder is preferably 0.05 mol% or more and 5 mol% or less. (X / Ni + Co + Mn + M) is more preferably 4 mol% or less, and particularly preferably 3 mol% or less. (X / Ni + Co + Mn + M) is more preferably 0.1 mol% or more, and particularly preferably 1 mol% or more. The upper limit and the lower limit thereof can be randomly combined.

Examples of the combination include (X / (Ni + Co + Mn + M)) being 0.1 mol% or more and 4 mol% or less, and 1 mol% or more and 3 mol% or less.

In the present embodiment, the composition of the coating material can be confirmed by using STEM-EDX element line analysis, inductively coupled plasma emission spectrometry, electron probe microanalyzer analysis, or the like of the cross section of the primary particles or the secondary particles. The crystal structure of the coating material can be confirmed by using powder X-ray diffraction or electron diffraction.

(Layered Structure)

In the present embodiment, the crystal structure of the lithium metal complex oxide powder is a layered structure, and more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_112$, $P3_121$, $P3_212$, $P3_221$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, in order to obtain a lithium secondary battery having a high discharge capacity, the crystal structure is particularly preferably a hexagonal crystal structure belonging to the space group R-3m, or a monoclinic crystal structure belonging to C2/m.

[Manufacturing Method of Lithium Metal Complex Oxide Powder]

Hereinafter, a manufacturing method the lithium metal complex oxide powder of the present embodiment will be described.

The manufacturing method of the lithium metal complex oxide powder of the present embodiment is preferably a manufacturing method including the following (1), (2), and (3) in this order.

(1) A step of manufacturing a precursor powder of a lithium metal complex oxide powder.
(2) A mixing step of mixing the precursor powder and a lithium compound to obtain a mixture.
(3) A step of **calcining** the mixture to obtain a lithium metal complex oxide powder.

**[Step of Manufacturing Precursor Powder of Positive Electrode Active Material for Lithium Secondary Batteries]**

First, among the metals constituting the target lithium metal complex oxide powder, a metal complex compound containing a metal other than lithium is manufactured. There are cases where the metal complex compound is referred to as a "precursor".

The metal complex compound is a nickel-containing metal complex compound containing nickel, which is an essential metal, and cobalt, manganese, and the element M, which are optional metals.

As the nickel-containing metal complex compound, a nickel-containing metal complex hydroxide or a nickel-containing metal complex oxide can be used.

The precursor can be manufactured by a generally known coprecipitation method. As the coprecipitation method, a batch coprecipitation method or a continuous coprecipitation method can be used.

Hereinafter, the manufacturing method will be described in detail, taking a nickel cobalt manganese metal complex hydroxide (hereinafter, sometimes referred to as "metal complex hydroxide") containing nickel, cobalt, and manganese as metals as an example.

First, by a continuous coprecipitation method described in Japanese Unexamined Patent Application, First Publication No. 2002-201028, a nickel salt solution, a cobalt salt solution, a manganese salt solution, and a complexing agent are reacted, whereby a metal complex hydroxide represented by $Ni_{(1-y-z)}Co_yMn_z(OH)_2$ (in the formula, y and z correspond to y and z of Composition Formula (I)) is manufactured.

A nickel salt which is a solute of the nickel salt solution is not particularly limited, and for example, any of nickel sulfate, nickel nitrate, nickel chloride, and nickel acetate can be used.

As a cobalt salt which is a solute of the cobalt salt solution, for example, any of cobalt sulfate, cobalt nitrate, cobalt chloride, and cobalt acetate can be used.

As a manganese salt which is a solute of the manganese salt solution, for example, any of manganese sulfate, manganese nitrate, manganese chloride, and manganese acetate can be used.

The above metal salts are used at a ratio corresponding to the composition ratio of $Ni_{(1-y-z)}Co_yMn_z(OH)_2$. That is, the amount of each of the metal salts used is set so that the molar ratio of nickel in the solute of the nickel salt solution, cobalt in the solute of the cobalt salt solution, and manganese in the solute of the manganese salt solution becomes (1-y-z-w):y:z:w corresponding to the composition ratio of $Ni_{(1-y-z)}Co_yMn_z(OH)_2$.

The solvent of the nickel salt solution, the cobalt salt solution, and the manganese salt solution is water.

The complexing agent is capable of forming a complex with nickel ions, cobalt ions, and manganese ions in an aqueous solution. Examples of the complexing agent include ammonium ion donors (ammonium sulfate, ammonium chloride, ammonium carbonate, ammonium fluoride, and the like), hydrazine, ethylenediaminetetraacetic acid, nitrilotriacetic acid, uracildiacetic acid, and glycine.

The complexing agent may be or may not be used in the step of manufacturing the precursor. In a case where the complexing agent is used, for example, the molar ratio of the amount of the complexing agent contained in the mixed solution containing the metal salt solutions and the complexing agent to the total number of moles of the metal salts is more than 0 and 2.0 or less. In the present embodiment, for example, the molar ratio of the amount of the complexing agent contained in the mixed solution containing the nickel salt solution, the cobalt salt solution, the manganese salt solution, and the complexing agent to the total number of moles of nickel, cobalt, and manganese is more than 0 and 2.0 or less.

In the coprecipitation method, in order to adjust the pH value of the mixed solution, an alkali metal hydroxide is added to the mixed solution before the pH of the mixed solution changes from alkaline to neutral. Examples of the alkali metal hydroxide include sodium hydroxide and potassium hydroxide.

The pH value in the present specification is defined as a value measured when the temperature of the mixed solution is 40°C. The pH of the mixed solution is measured when the temperature of the mixed solution sampled from a reaction tank reaches 40°C.

When the complexing agent in addition to the nickel salt solution, the cobalt salt solution, and the manganese salt solution is continuously supplied to the reaction tank, nickel, cobalt, and manganese react, whereby $Ni_{(1-y-z)}Co_yMn_z(OH)_2$ is produced.

During the reaction, the temperature of the reaction tank is controlled within a range of, for example, 20°C or higher and 80°C or lower, and preferably 30°C or higher and 70°C or lower.

During the reaction, the pH value in the reaction tank is controlled within a range of, for example, a pH of 9 or more and a pH of 13 or less, and preferably a pH of 11 or more and 13 or less at 40°C.

The materials in the reaction tank are appropriately stirred and mixed.

As the reaction tank, a reaction tank of a type which causes the formed reaction precipitate to overflow for separation can be used.

By appropriately controlling the concentrations of the metal salts in the metal salt solutions supplied to the reaction tank, the stirring speed, the reaction temperature, the reaction pH, calcining conditions, which will be described later, and the like, it is possible to control various physical properties of a lithium metal complex oxide, which is finally obtained.

In addition to the control of the above conditions, various gases such as an inert gas such as nitrogen, argon, and carbon dioxide, an oxidizing gas such as air and oxygen, or a mixed gas thereof may be supplied into the reaction tank to control the oxidation state of the obtained reaction product.

As a compound (oxidizing agent) for oxidizing the obtained reaction product, peroxides such as hydrogen peroxide, peroxide salts such as permanganate, perchlorate, hypochlorite, nitric acid, halogen, ozone, and the like can be used.

As a compound for reducing the obtained reaction product, organic acids such as oxalic acid and formic acid, sulfites, hydrazine, and the like can be used.

The inside of the reaction tank may have an inert atmosphere. When the inside of the reaction tank has an inert atmosphere, the agglomeration of metals that are more easily oxidized than nickel among the metals contained in the mixed solution prior to nickel is suppressed. Therefore, a uniform metal complex hydroxide can be obtained.

Alternatively, the inside of the reaction tank may have an appropriate oxidizing atmosphere. The oxidizing atmosphere may be an oxygen-containing atmosphere in which an oxidizing gas is mixed with an inert gas. When the inside of the reaction tank in which an oxidizing agent may be present in an inert gas atmosphere has an appropriate oxidizing atmosphere, transition metals contained in the mixed solution are appropriately oxidized, and the morphology of the metal complex oxide can be easily controlled.

The oxygen and the oxidizing agent in the oxidizing atmosphere may have enough oxygen atoms to oxidize the transition metals.

In a case where the oxidizing atmosphere is an oxygen-containing atmosphere, the atmosphere in the reaction tank can be controlled by a method of flowing an oxidizing gas into the reaction tank to bubble the mixed solution with the oxidizing gas, or the like.

After the above reaction, the obtained reaction precipitate is washed and then dried to obtain a precursor. In the present embodiment, a nickel cobalt manganese metal complex hydroxide is obtained as the precursor.

In a case where impurities derived from the mixed solution remain in the reaction precipitate simply by washing with water, the reaction precipitate may be washed with a weak acid water or an alkaline solution containing sodium hydroxide or potassium hydroxide, as necessary.

In the above example, the nickel cobalt manganese complex hydroxide is manufactured, but a nickel cobalt manganese complex oxide may be prepared.

For example, a nickel cobalt manganese complex oxide can be prepared by calcining the nickel cobalt manganese complex hydroxide.

As the calcining time, the total time from the start of temperature rise to the end of temperature holding after the temperature is reached is preferably 1 hour or longer and 30 hours or shorter. The temperature rising rate of a heating step in which the highest holding temperature is reached is preferably 180 °C/hr or faster, more preferably 200 °C/hr or faster, and particularly preferably 250 °C/hr or faster.

The highest holding temperature in the present specification is the highest temperature of holding temperatures of the atmosphere in a calcining furnace in the heating step or a calcining step, and means a calcining temperature in the heating step or the calcining step. In a case of a main calcining step having a plurality of heating steps, the highest holding temperature means the highest temperature in each of the heating steps.

The temperature rising rate in the present specification is calculated from the time from the start of temperature rise to the reaching of the highest holding temperature in a calcining apparatus, and the temperature difference between the temperature at the time of the start of temperature rise to the highest holding temperature in the calcining furnace of the calcining apparatus.

When isolating the precursor, a method of dehydrating a slurry containing the reaction precipitate (coprecipitate slurry) by centrifugation, suction filtration, or the like is preferably used.

The coprecipitate obtained by the dehydration is preferably washed with water or a washing solution containing an alkali. In the present embodiment, washing with a washing solution containing an alkali is preferable, and washing with a sodium hydroxide solution is more preferable. Alternatively, washing may be performed using a washing solution containing a sulfur element. Examples of the washing solution containing a sulfur element include a sulfate aqueous solution of potassium and sodium.

• Step of Pulverizing Precursor Powder

In the present embodiment, a step of pulverizing the manufactured precursor is provided. By pulverizing the precursor, a lithium metal complex oxide powder satisfying the requirements (2) and (3) can be manufactured.

The pulverizing step is preferably performed using an air flow type pulverizer, a collision type pulverizer with a classification mechanism, a pin mill, a ball mill, a jet mill, a counter jet mill with a classification rotor, or the like.

Taking a pulverization step using a jet mill as an example, a lithium metal complex oxide powder satisfying the requirements (2) and (3) can be obtained by pulverizing the precursor using the jet mill at a pulverization gas pressure of 0.8 MPa or more.

[Mixing Step]

This step is a step of mixing the lithium compound and the precursor to obtain a mixture.

• Lithium compound

As the lithium compound used in the present embodiment, any one or a mixture of two or more of lithium carbonate, lithium nitrate, lithium acetate, lithium hydroxide, lithium oxide, lithium chloride, and lithium fluoride can be used. Among these, one or both of lithium hydroxide and lithium carbonate are preferable.

In a case where lithium hydroxide contains lithium carbonate as an impurity, the amount of lithium carbonate in lithium hydroxide is preferably 5 mass% or less.

A method of mixing the precursor and the lithium compound will be described.

The precursor is dried and thereafter mixed with the lithium compound. The drying conditions are not particularly limited, and for example, may be any of the following drying conditions 1) to 3).

1) Condition under which the precursor is not oxidized or reduced. Specifically, the condition is a drying condition under which an oxide remains as an oxide, or a drying condition under which a hydroxide remains as a hydroxide.
2) Condition under which the precursor is oxidized. Specifically, the condition is a drying condition for oxidation from a hydroxide to an oxide.
3) Condition under which the precursor is reduced. Specifically, the condition is a drying condition for reduction from an oxide to a hydroxides.

The drying conditions 1) to 3) may be appropriately selected depending on whether the nickel-containing metal complex compound to be manufactured is a nickel-containing metal complex hydroxide or a nickel-containing metal complex oxide.

For the condition under which oxidation or reduction does not occur, an inert gas such as nitrogen, helium, or argon may be used in the atmosphere during the drying.

For the condition under which a hydroxide is oxidized, oxygen or air may be used in the atmosphere during the drying.

In addition, for the condition under which the precursor is reduced, a reducing agent such as hydrazine or sodium sulfite may be used in an inert gas atmosphere during the drying.

After the precursor is dried, classification may be performed as appropriate.

The above lithium compound and the precursor are mixed in consideration of the composition ratio of the final object. For example, in a case of using a nickel cobalt manganese metal complex hydroxide is used, the lithium compound and the precursor are mixed in proportions corresponding to the composition ratio of $Li[Li_x(Ni_{(1-y-z)}Co_yMn_z)_{1-x}]O_2$ (in the formula, x, y, and z correspond to x, y, and z of Composition Formula (I)). By calcining a mixture of the nickel cobalt manganese metal complex hydroxide as the precursor and the lithium compound in a subsequent calcining step, a lithium-nickel cobalt manganese metal complex oxide is obtained.

From the viewpoint of obtaining a uniform lithium-nickel cobalt-manganese metal complex oxide, x is preferably more than 0, more preferably 0.01 or more, and even more preferably 0.02 or more. In addition, from the viewpoint of obtaining a lithium-nickel cobalt-manganese metal complex oxide having high purity, x is preferably 0.1 or less, more preferably 0.08 or less, and even more preferably 0.06 or less.

The upper limit and the lower limit of r can be randomly combined.

[Step of Calcining Mixture to Obtain Lithium Metal Complex Oxide Powder]

In the present embodiment, it is preferable to bake the mixture of the lithium compound and the precursor in the presence of an inert melting agent. By calcining the mixture of the precursor and the lithium compound in the presence of the inert melting agent, it is possible to suppress the generation of the secondary particles due to sintering of the primary particles. In addition, the growth of the primary particles can be promoted.

Calcining the mixture in the presence of the inert melting agent can promote the reaction of the mixture. The inert melting agent may remain in the lithium metal complex oxide powder after the calcining, or may be removed by washing with a washing solution after the calcining. In the present embodiment, it is preferable to wash the lithium metal complex oxide powder after the calcining with pure water, an alkaline washing solution, or the like.

By adjusting the holding temperature in the calcining, the primary particle diameter of the obtained lithium metal complex oxide powder can be controlled within a preferable range of the present embodiment.

Generally, the higher the holding temperature, the larger the primary particle diameter, and the smaller the BET specific surface area. The holding temperature in the calcining may be appropriately adjusted according to the kind of transition metal element used, and the kind and amount of the precipitant and the inert melting agent.

The average crystallite diameter of the obtained lithium metal complex oxide powder can be controlled within a preferable range of the present embodiment by adjusting the holding temperature in calcining, adjusting the pulverization strength of the precursor, or a combination thereof.

In the present embodiment, the calcining temperature may be set in consideration of the melting point of the inert melting agent, which will be described later, and the calcining is preferably performed in a range of the melting point of the inert melting agent - 200°C or higher and the melting point of the inert melting agent + 200°C or lower.

The calcining temperature may be specifically in a range of 200°C or higher and 1,150°C or lower, and is preferably 300°C or higher and 1,050°C or lower, and more preferably 500°C or higher and 1,000°C or lower.

By adjusting the holding time in the calcining, the primary particle diameter of the obtained lithium metal complex oxide powder can be controlled within a preferable range of the present embodiment. The longer the holding time, the larger the primary particle diameter, and the smaller the BET specific surface area. The holding time in the calcining may be appropriately adjusted according to the kind of transition metal element used, and the kind and amount of the precipitant and the inert melting agent.

When the calcining temperature is equal to or higher than the lower limit, a positive electrode active material for lithium secondary batteries having a strong crystal structure can be obtained. When the calcining temperature is equal to or lower than the upper limit, volatilization of lithium on the surface of the secondary particles can be reduced.

In the present specification, the calcining temperature means the temperature of the atmosphere in the calcining furnace, and is the highest temperature of the holding temperature in the main calcining step (hereinafter, sometimes referred to as the highest holding temperature), and in a case of the main calcining step having the plurality of heating steps, means the temperature during heating at the highest holding temperature in each of the heating steps.

Specifically, the time for holding at the calcining temperature is 0.1 hours or longer and 20 hours or shorter, and preferably 0.5 hours or longer and 10 hours or shorter. The temperature rising rate to the calcining temperature is usually 50 °C/hr or faster and 400 °C/hr or slower, and the temperature decreasing rate from the calcining temperature to room temperature is usually 10 °C/hr or faster and 400 °C/hr or shorter. Further, as the calcining atmosphere, air, oxygen, nitrogen, argon, or a mixed gas thereof can be used.

In the present embodiment, the temperature rising rate of the heating step in which the highest holding temperature is reached is preferably 180 °C/hr or more, more preferably 200 °C/hr or more, and particularly preferably 250 °C/hr or more.

The temperature rising rate of the heating step in which the highest holding temperature is reached is calculated from the time from when the temperature rising is started until a holding temperature, which will be described, is reached in the calcining apparatus.

The inert melting agent that can be used in the present embodiment is not particularly limited as long as the inert melting agent does not easily react with the mixture during the calcining. In the present embodiment, the inert melting agent is one or more selected from the group consisting of a fluoride of one or more elements (hereinafter referred to as "A") selected from the group consisting of Na, K, Rb, Cs, Ca, Mg, Sr, and Ba, and a chloride of A, a carbonate of A, a sulfate of A, a nitrate of A, a phosphate of A, a hydroxide of A, a molybdate of A, and a tungstate of A.

As the fluoride of A, there are $NaF$ (melting point: 993°C), $KF$ (melting point: 858°C), $RbF$ (melting point: 795°C), $CsF$ (melting point: 682°C), $CaF_2$ (melting point: 1,402°C), $MgF_2$ (melting point: 1,263°C), $SrF_2$ (melting point: 1,473°C), and $BaF_2$ (melting point: 1,355°C).

As the chloride of A, there are $NaCl$ (melting point: 801°C), $KCl$ (melting point: 770°C), $RbCl$ (melting point: 718°C), $CsCl$ (melting point: 645°C), $CaCl_2$ (melting point: 782°C), $MgCl_2$ (melting point: 714°C), $SrCl_2$ (melting point: 857°C), and $BaCh$ (melting point: 963°C).

As the carbonate of A, there are $Na_2CO_3$ (melting point: 854°C), $K_2CO_3$ (melting point: 899°C), $Rb_2CO_3$ (melting point: 837°C), $Cs_2CO_3$ (melting point: 793°C), $CaCO3$ (melting point: 825°C), $MgCO_3$ (melting point: 990°C), $SrCO_3$ (melting point: 1,497°C), and $BaCO_3$ (melting point: 1,380°C).

As the sulfate of A, there are $Na_2SO_4$ (melting point: 884°C), $K_2SO_4$ (melting point: 1,069°C), $Rb_2SO_4$ (melting point: 1,066°C), $Cs_2SO_4$ (melting point: 1,005°C), $CaSO_4$ (melting point: 1,460°C), $MgSO_4$ (melting point: 1,137°C), $SrSO_4$ (melting point: 1,605°C), and $BaSO_4$ (melting point: 1,580°C).

As the nitrate of A, there are $NaNO_3$ (melting point: 310°C), $KNO_3$ (melting point: 337°C), $RbNO_3$ (melting point: 316°C), $CsNO_3$ (melting point: 417°C), $Ca(NO_3)_2$ (melting point: 561°C), $Mg(NO_3)_2$, $Sr(NO_3)_2$ (melting point: 645°C), and $Ba(NO_3)_2$ (melting point: 596°C).

As the phosphates of A, there are $Na_3PO_4$, $K_3PO_4$ (melting point: 1,340°C), $Rb_3PO_4$, $Cs_3PO_4$, $Ca_3(PO_4)_2$, $Mg_3(PO_4)_2$ (melting point: 1,184°C), $Sr_3(PO_4)_2$ (melting point: 1,727°C), and $Ba_3(PO_4)_2$ (melting point: 1,767°C).

As the hydroxide of A, there are NaOH (melting point: 318°C), KOH (melting point: 360°C), RbOH (melting point: 301°C), CsOH (melting point: 272°C), Ca(OH)$_2$ (melting point: 408°C), Mg(OH)$_2$ (melting point: 350°C), Sr(OH)$_2$ (melting point: 375°C), and Ba(OH)$_2$ (melting point: 853°C).

As the molybdate of A, there are Na$_2$MoO$_4$ (melting point: 698°C), K$_2$MoO$_4$ (melting point: 919°C), Rb$_2$MoO$_4$ (melting point: 958°C), Cs$_2$MoO$_4$ (melting point: 956°C), CaMoO$_4$ (melting point: 1,520°C), MgMoO$_4$ (melting point: 1,060°C), SrMoO$_4$ (melting point: 1,040°C), and BaMoO$_4$ (melting point: 1,460°C).

As the tungstate of A, there are Na$_2$WO$_4$ (melting point: 687°C), K$_2$WO$_4$, Rb$_2$WO$_4$, Cs$_2$WO$_4$, CaWO$_4$, MgWO$_4$, SrWO$_4$, and BaWO$_4$.

In the present embodiment, two or more kinds of these inert melting agents can be used. In a case of using two or more kinds, the melting point of the entire inert melting agent may be lowered. Among these inert melting agents, as an inert melting agent for obtaining a lithium metal complex oxide powder having higher crystallinity, any of the carbonate of A, the sulfate of A, the chloride of A, or a combination thereof is preferable. In addition, A is preferably either one or both of sodium (Na) and potassium (K). That is, among the above, a particularly preferable inert melting agent is one or more selected from the group consisting of NaOH, KOH, NaCl, KCl, Na$_2$CO$_3$, K$_2$CO$_3$, Na$_2$SO$_4$, and K$_2$SO$_4$.

In the present embodiment, potassium sulfate or sodium sulfate is preferable as the inert melting agent.

Pure water or an alkaline washing solution can be used for washing the inert melting agent remaining in the lithium metal complex oxide powder after the calcining.

Examples of the alkaline washing solution include one or more anhydrides selected from the group consisting of LiOH (lithium hydroxide), NaOH (sodium hydroxide), KOH (potassium hydroxide), Li$_2$CO$_3$ (lithium carbonate), Na$_2$CO$_3$ (sodium carbonate), K$_2$CO$_3$ (potassium carbonate), and (NH$_4$)$_2$CO$_3$ (ammonium carbonate), and aqueous solutions of the hydrates thereof. Moreover, ammonia can also be used as an alkali.

The temperature of the washing solution used for washing is preferably 15°C or lower, more preferably 10°C or lower, and even more preferably 8°C or lower. By controlling the temperature of the washing solution to the above range within a range that does not cause freezing, it is possible to suppress excessive elution of lithium ions from the crystal structure of the lithium metal complex oxide powder into the washing solution during washing.

In the washing step, as a method of bringing the washing solution and the lithium metal complex oxide powder into contact with each other, there are a method of adding the lithium metal complex oxide powder into the aqueous solution of each washing solution and stirring the resultant, a method of applying the aqueous solution of each washing solution as shower water to the lithium metal complex oxide powder, and a method of adding the lithium metal complex oxide powder into the aqueous solution of each washing solution, stirring the resultant, separating the lithium metal complex oxide powder from the aqueous solution of each washing solution, and then applying the aqueous solution of each washing solution as shower water to the lithium metal complex oxide powder after being separated.

• Crushing Step

After the calcining, the obtained lithium metal complex oxide powder may be crushed. In a case where the lithium metal complex oxide powder obtained by the calcining does not satisfy the requirements (2) and (3), it is preferable to control the lithium metal complex oxide powder by a crushing step. By the crushing step, the lithium metal complex oxide powder can be controlled to satisfy the requirements (2) and (3).

The crushing step is preferably performed using an air flow type pulverizer, a collision type pulverizer with a classification mechanism, a pin mill, a ball mill, a jet mill, a counter jet mill with a classification rotor, or the like.

When crushing is performed particularly using a pin mill, the agglomeration of the primary particles contained in the lithium metal complex oxide powder can be pulverized.

Taking a crushing step using a pin mill as an example, a lithium metal complex oxide powder satisfying the requirements (2) and (3) can be obtained by performing crushing at a rotation speed of 5,000 rpm or more. The rotation speed of the pin mill is preferably 5,000 rpm or more, and more preferably 10,000 rpm or more. The rotation speed of the pin mill is preferably 25,000 rpm or less.

[Manufacturing Method of Lithium Metal Complex Oxide Powder having Coating Material]

A case of manufacturing a lithium metal complex oxide powder having a coating material will be described.

First, a coating raw material and the lithium metal complex oxide powder are mixed.

Thereafter, a heat treatment is performed as necessary, whereby a coating material formed of the coating raw material can be formed on the surface of primary particles or secondary particles of the lithium metal complex oxide powder.

The coating raw material is not particularly limited, and oxides, hydroxides, carbonates, nitrates, sulfates, halides, oxalates, or alkoxides can be used, and oxides are preferable.

More specifically, it is preferable that the coating raw material and the lithium metal complex oxide are uniformly mixed until the agglomerates of the coating raw material or the agglomerates of the lithium metal complex oxide disappear.

A mixing apparatus is not limited as long as the coating raw material and the lithium metal complex oxide can be uniformly mixed, but it is preferable to perform mixing using the Lödige mixer. The same applies to a case where the coating raw material is added and mixed in the mixing step of mixing the precursor and the lithium compound.

Furthermore, the coating material can be firmly adhered to the surface of the lithium metal complex oxide powder by being held in an atmosphere containing water after the mixing.

The coating layer can also be firmly adhered to the surface of the lithium metal complex oxide by holding the coating raw material and the lithium metal complex oxide in an atmosphere containing water or water and carbon dioxide gas after the mixing.

There are cases where the heat treatment conditions (temperature, holding time) in the heat treatment performed as necessary after the mixing of the coating raw material and the lithium metal complex oxide powder vary depending on the kind of the coating raw material.

The heat treatment temperature is preferably set to be in a range of 200°C or higher and 850°C or lower, but is preferably a temperature equal to or lower than the calcining temperature of the lithium metal complex oxide powder. When the temperature is higher than the calcining temperature of the lithium metal complex oxide powder, there are cases where the coating raw material forms a solid solution with the lithium metal complex oxide powder and the coating material is not formed. As an atmosphere in the heat treatment, an atmosphere gas similar to that in the above-described calcining can be adopted.

By using techniques such as sputtering, CVD, and vapor deposition, the coating material can be formed on the surface of the lithium metal complex oxide powder to obtain a lithium metal complex oxide powder having a coating layer or coated particles.

Moreover, there are cases where a lithium metal complex oxide powder having a coating material is obtained by mixing and calcining the precursor, the lithium compound, and the coating raw material.

The lithium metal complex oxide powder having the coating material on the surface of the primary particles or secondary particles of the lithium metal complex oxide powder is appropriately crushed and classified to obtain a lithium metal complex oxide powder.

<Positive Electrode Active Material for Lithium Secondary Batteries>

The present embodiment is a positive electrode active material for lithium secondary batteries containing the lithium metal complex oxide powder of the present invention.

<Lithium Secondary Battery>

Next, a positive electrode using the positive electrode active material for lithium secondary batteries using the lithium metal complex oxide powder manufactured according to the present embodiment as a positive electrode active material for lithium secondary batteries, and a lithium secondary battery having the positive electrode will be described while describing the configuration of a lithium secondary battery.

An example of the lithium secondary battery of the present embodiment includes a positive electrode, a negative electrode, a separator interposed between the positive electrode and the negative electrode, and an electrolytic solution disposed between the positive electrode and the negative electrode.

Figs. 1A and 1B are schematic views showing an example of the lithium secondary battery of the present embodiment. A cylindrical lithium secondary battery 10 of the present embodiment is manufactured as follows.

First, as shown in Fig. 1A, a pair of separators 1 having a strip shape, a strip-shaped positive electrode 2 having a positive electrode lead 21 at one end, and a strip-shaped negative electrode 3 having a negative electrode lead 31 at one end are stacked in order of the separator 1, the positive electrode 2, the separator 1, and the negative electrode 3 and are wound to form an electrode group 4.

Next, as shown in Fig. 1B, the electrode group 4 and an insulator (not shown) are accommodated in a battery can 5, the can bottom is then sealed, and the electrode group 4 is impregnated with an electrolytic solution 6 so that an electrolyte is disposed between the positive electrode 2 and the negative electrode 3. Furthermore, the upper portion of the battery can 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as a shape of the lithium secondary battery having the electrode group 4, a shape defined by IEC60086 which is a standard for a battery defined by the International Electrotechnical Commission (IEC), or by JIS C 8500 can be adopted. For example, shapes such as a cylindrical shape and a square shape can be adopted.

Furthermore, the lithium secondary battery is not limited to the wound type configuration, and may have a stacked type configuration in which a stacked structure of a positive electrode, a separator, a negative electrode, and a separator is repeatedly stacked. A so-called coin type battery, a button type battery, and a paper type (or sheet type) battery are exemplary examples of the stacked type lithium secondary battery.

Hereinafter, each configuration will be described in order.

(Positive Electrode)

The positive electrode of the present embodiment can be manufactured by first adjusting a positive electrode mixture containing a positive electrode active material, a conductive material, and a binder, and causing a positive electrode current collector to hold the positive electrode mixture.

(Conductive Material)

A carbon material can be used as the conductive material included in the positive electrode of the present embodiment. As the carbon material, there are graphite powder, carbon black (for example, acetylene black), a fibrous carbon material, and the like. Since carbon black is fine particles and has a large surface area, the addition of a small amount of carbon black to the positive electrode mixture increases the conductivity inside the positive electrode and thus improves the charge/discharge efficiency and output characteristics. However, when the carbon black is added too much, both the binding force between the positive electrode mixture and the positive electrode current collector and the binding force inside the positive electrode mixture by the binder decrease, which causes an increase in internal resistance.

The proportion of the conductive material in the positive electrode mixture is preferably 5 parts by mass or more and 20 parts by mass or less with respect to 100 parts by mass of the positive electrode active material. In a case of using a fibrous carbon material such as graphitized carbon fiber or carbon nanotube as the conductive material, the proportion can be reduced.

(Binder)

A thermoplastic resin can be used as the binder included in the positive electrode of the present embodiment.

As the thermoplastic resin, fluorine resins such as polyvinylidene fluoride (hereinafter, sometimes indicated as PVdF), polytetrafluoroethylene (hereinafter, sometimes indicated as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene can be adopted.

These thermoplastic resins may be used as a mixture of two or more. By using a fluorine resin and a polyolefin resin as the binder and setting the ratio of the fluorine resin to the entire positive electrode mixture to 1 mass% or more and 10 mass% or less and the ratio of the polyolefin resin to 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, from the viewpoint of easy processing and low cost, it is preferable to use Al as the forming material and process Al into a thin film.

As a method of causing the positive electrode current collector to hold the positive electrode mixture, a method of press-forming the positive electrode mixture on the positive electrode current collector can be adopted. In addition, the positive electrode mixture may be held by the positive electrode current collector by forming the positive electrode mixture into a paste using an organic solvent, applying the obtained paste of the positive electrode mixture to at least one side of the positive electrode current collector, drying the paste, and pressing the paste to be fixed.

In a case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes indicated as NMP) can be adopted.

Examples of a method of applying the paste of the positive electrode mixture to the positive electrode current collector include a slit die coating method, a screen coating method, a curtain coating method, a knife coating method, a gravure coating method, and an electrostatic spraying method.

The positive electrode can be manufactured by the method mentioned above.

(Negative Electrode)

The negative electrode included in the lithium secondary battery of the present embodiment may be capable of being doped with or dedoped from lithium ions at a potential lower than that of the positive electrode, and an electrode in which a negative electrode mixture containing a negative electrode active material is held by a negative electrode current collector, and an electrode formed of a negative electrode active material alone can be adopted.

(Negative Electrode Active Material)

As the negative electrode active material included in the negative electrode, materials that can be doped with or dedoped from lithium ions at a potential lower than that of the positive electrode, such as carbon materials, chalcogen compounds (oxides, sulfides, and the like), nitrides, metals, and alloys can be adopted.

As the carbon materials that can be used as the negative electrode active material, graphite such as natural graphite and artificial graphite, cokes, carbon black, pyrolytic carbons, carbon fibers, and an organic polymer compound calcined body can be adopted.

As the oxides that can be used as the negative electrode active material, oxides of silicon represented by the formula $SiO_x$ (where, x is a positive real number) such as $SiO_2$ and SiO; oxides of titanium represented by the formula $TiO_x$ (where x is a positive real number) such as $TiO_2$ and TiO; oxides of vanadium represented by the formula $VO_x$ (where x is a positive real number) such as $V_2O_5$ and $VO_2$; oxides of iron represented by the formula $FeO_x$ (where x is a positive real number) such as $Fe_3O_4$, $Fe_2O_3$, and FeO; oxides of tin represented by the formula $SnO_x$ (where x is a positive real number) such as $SnO_2$ and SnO; oxides of tungsten represented by a general formula $WO_x$ (where, x is a positive real number) such as $WO_3$ and $WO_2$; and complex metal oxides containing lithium and titanium or vanadium such as $Li_4Ti_5O_{12}$ and $LiVO_2$ can be adopted.

As the sulfides that can be used as the negative electrode active material, sulfides of titanium represented by the formula $TiS_x$ (where, x is a positive real number) such as $Ti_2S_3$, TiS2, and TiS; sulfides of vanadium represented by the formula $VS_x$ (where x is a positive real number) such $V_3S_4$, $VS_2$, and VS; sulfides of iron represented by the formula $FeS_x$ (where x is a positive real number) such as $Fe_3S_4$, $FeS_2$, and FeS; sulfides of molybdenum represented by the formula $MoS_x$ (where x is a positive real number) such as $Mo_2S_3$ and $MoS_2$; sulfides of tin represented by the formula $SnS_x$ (where x is a positive real number) such as $SnS_2$ and SnS; sulfides of tungsten represented by the formula $WS_x$ (where x is a positive real number) such as $WS_2$; sulfides of antimony represented by the formula $SbS_x$ (where x is a positive real number) such as $Sb_2S_3$; and sulfides of selenium represented by the formula $SeS_x$ (where x is a positive real number) such as $Se_5S_3$, $SeS_2$, and SeS can be adopted.

As the nitrides that can be used as the negative electrode active material, lithium-containing nitrides such as $Li_3N$ and $Li_{3-x}A_xN$ (where A is either one or both of Ni and Co, and $0 < x < 3$ is satisfied) can be adopted.

These carbon materials, oxides, sulfides, and nitrides may be used singly or in combination of two or more. In addition, these carbon materials, oxides, sulfides, and nitrides may be either crystalline or amorphous.

Moreover, as the metals that can be used as the negative electrode active material, lithium metal, silicon metal, tin metal, and the like can be adopted.

As the alloys that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can be adopted.

These metals and alloys are mainly used alone as an electrode after being processed into, for example, a foil shape.

Among the above-mentioned negative electrode active materials, the carbon material mainly including graphite such as natural graphite and artificial graphite is preferably used because the potential of the negative electrode hardly changes from the uncharged state to the fully charged state during charging (the potential flatness is good), the average discharge potential is low, and the capacity retention ratio during repeated charging and discharging is high (the cycle characteristics are good). The shape of the carbon material may be, for example, a flaky shape such as natural graphite, a spherical shape such as mesocarbon microbeads, a fibrous shape such as graphitized carbon fiber, or an agglomerate of fine powder.

The negative electrode mixture described above may contain a binder as necessary. As the binder, a thermoplastic resin can be adopted, and specifically, PVdF, thermoplastic polyimide, carboxymethylcellulose, polyethylene, and polypropylene can be adopted.

(Negative Electrode Current Collector)

As the negative electrode current collector included in the negative electrode, a strip-shaped member formed of a metal material, such as Cu, Ni, and stainless steel, as the forming material can be adopted. Among these, it is preferable to use Cu as the forming material and process Cu into a thin film because Cu is less likely to form an alloy with lithium and can be easily processed.

As a method of causing the negative electrode current collector to hold the negative electrode mixture, similarly to the case of the positive electrode, a method using press-forming, or a method of forming the negative electrode mixture into a paste using a solvent or the like, applying the paste onto the negative electrode current collector, drying the paste, and pressing the paste to be compressed can be adopted.

(Separator)

As the separator included in the lithium secondary battery of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during battery use (during charging and discharging).

In addition, the porosity of the separator is preferably 30 vol% or more and 80 vol% or less, and more preferably 40 vol% or more and 70 vol% or less. The separator may be a laminate of separators having different porosities.

(Electrolytic Solution)

The electrolytic solution included in the lithium secondary battery of the present embodiment contains an electrolyte and an organic solvent.

As the electrolyte contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, Li-BOB (here, BOB refers to bis(oxalato)borate), LiFSI (here, FSI refers to bis(fluorosulfonyl)imide), lower aliphatic carboxylic acid lithium salts, and $LiAlCl_4$ can be adopted, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent contained in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charging or discharging is performed at a high current rate, being less likely to deteriorate even during a long-term use, and being nondegradable even in a case where a graphite material such as natural graphite or artificial graphite is used as the negative electrode active material.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolytic solution is held in a polymer compound can also be used. Inorganic solid electrolytes containing

sulfides such as $Li_2S-SiS_2$, $Li_2S-GeS_2$, $Li_2S-P_2S_5$, $Li_2S-B_2S_3$, $Li_2S-SiS_2-Li_3PO_4$, $Li_2S-SiS_2-Li_2SO_4$, and $Li_2S-GeS_2-P_2S_5$ can be adopted, and a mixture or two or more thereof may be used. By using these solid electrolytes, the safety of the lithium secondary battery may be further enhanced.

In addition, in a case of using a solid electrolyte in the lithium secondary battery of the present embodiment, there may be cases where the solid electrolyte plays a role of the separator, and in such a case, the separator may not be required.

Since the positive electrode active material having the above-described configuration uses the lithium metal complex oxide powder manufactured according to the present embodiment described above, the initial charge/discharge efficiency of the lithium secondary battery using the positive electrode active material can be improved.

Moreover, since the positive electrode having the above-described configuration has the positive electrode active material for lithium secondary batteries having the above-described configuration, the initial charge/discharge efficiency of the lithium secondary battery can be improved.

Furthermore, since the lithium secondary battery having the above-described configuration has the positive electrode described above, the lithium secondary battery becomes a secondary battery having high initial charge/discharge efficiency.

[Examples]

Next, the present invention will be described in more detail with reference to examples.

«Compositional Analysis»

The compositional analysis of a lithium metal complex oxide powder manufactured by the method described below was performed by using an inductively coupled plasma emission spectrometer (SPS 3000, manufactured by SII Nano Technology Inc.) after dissolving the obtained powder in hydrochloric acid.

<<Measurement of Average Primary Particle Diameter (R1)>>

The lithium metal complex oxide powder was placed on a conductive sheet attached onto a sample stage, and irradiated with an electron beam having an acceleration voltage of 20 kV using JSM-5510 manufactured by JEOL Ltd. for SEM observation. 50 primary particles are randomly extracted from an image (SEM photograph) obtained by the SEM observation, and for each of the primary particles, the distance (unidirectional diameter) between parallel lines sandwiched between the parallel lines drawn on a projected image of the primary particles in a certain direction was measured as the particle diameter of the primary particle. The arithmetic average value of the obtained particle diameters of the primary particles was taken as the average primary particle diameter (R1) of the lithium metal complex oxide powder.

«Measurement of Average Crystallite Diameter (Ra)»

A powder X-ray diffraction pattern for Rietveld analysis of the lithium metal complex oxide powder was acquired by powder X-ray diffraction measurement using **CuK$\alpha$ radiation by using D8 Advance, which is an XRD apparatus manufactured by** Bruker. From the acquired powder X-ray diffraction pattern, analysis was performed by using TOPAS, which is a powder X-ray analysis software made by Bruker, and using parameters specific to the apparatus Advance. The value of the crystallite diameter obtained by the analysis was taken as the average crystallite diameter (Ra).

<<R1/Ra>>

**The ratio "R1/Ra" of the average primary particle diameter (R1) to the average** crystallite diameter (Ra) measured by the above methods was obtained.

<<BET Specific Surface Area>>

The BET specific surface area was measured using Macsorb (registered trademark) manufactured by MOUNTECH Co., Ltd. after drying 1 g of the lithium metal complex oxide powder in a nitrogen atmosphere at 105°C for 30 minutes.

<<Measurement of $D_{10}$>>

0.1 g of the lithium metal complex oxide powder was put into 50 ml of 0.2 mass% sodium hexametaphosphate aqueous solution to obtain a dispersion liquid in which the powder was dispersed. Next, the particle size distribution of the obtained dispersion liquid was measured using a laser diffraction scattering particle size distribution measuring device (Microtrac MT3300EXII manufactured by MicrotracBEL Corp.) to obtain a volume-based cumulative particle size distribution curve. In the obtained cumulative particle size distribution curve, the value of the particle diameter at the point at which the cumulative volume from the fine particle side was 10% when the whole was 100% was obtained as the 10% cumulative volume particle size $D_{10}$ ($\mu$m).

«Amount of Residual Lithium»

20 g of the lithium metal complex oxide powder and 100 g of pure water were put into a 100 mL beaker and stirred for five minutes. After stirring, the lithium metal complex oxide powder was filtered, 0.1 mol/L of hydrochloric acid was added dropwise to 60 g of the remaining filtrate, and the pH of the filtrate was measured with a pH meter. The measurement temperature was set to 40°C. The titration amount of hydrochloric acid at pH = 8.3 $\pm$ 0.1 C was referred to as A ml, the titration amount of hydrochloric acid at pH = 4.5 $\pm$ 0.1 was referred to as B ml, and the concentrations of lithium carbonate and lithium hydroxide remaining in the lithium metal complex oxide powder were calculated from the following calculation expression. In the following expression, the molecular weights of lithium carbonate and lithium hydroxide were calculated by setting each atomic weight to H: 1.000, Li: 6.941, C: 12, and O: 16.

$$\text{Lithium carbonate concentration (mass\%)} =$$

$$\{0.1 \times (B - A) / 1000\} \times \{73.882 / (20 \times 60 / 100)\} \times 100$$

$$\text{Lithium hydroxide concentration (mass\%)} =$$

$$\{0.1 \times (2A - B) / 1000\} \times \{23.941 / (20 \times 60 / 100)\} \times 100$$

From the lithium carbonate concentration and the lithium hydroxide concentration calculated by the above expression, the amount of Li element remaining in the lithium metal complex oxide powder, that is, the residual lithium concentration was calculated by the following calculation expression.

$$\text{Residual lithium concentration (mass\%)} =$$

$$\text{Lithium carbonate concentration x 2 x 6.941 / 73.882 + lithium hydroxide}$$

$$\text{concentration x 6.941 / 23.941}$$

<Production of Positive Electrode for Lithium Secondary Batteries>

A paste-like positive electrode mixture was prepared by adding a lithium metal complex oxide powder obtained by the manufacturing method described later, a conductive material (acetylene black), and a binder (PVdF) to achieve a composition of lithium metal complex oxide powder:conductive material:binder = 92:5:3 (mass ratio) and performing kneading thereon. During the preparation of the positive electrode mixture, N-methyl-2-pyrrolidone was used as an organic solvent.
**The obtained positive electrode mixture was applied to a 40 $\mu$m**-thick Al foil serving as a current collector and dried in a vacuum at 150°C for 8 hours to obtain a positive electrode for lithium secondary batteries. The electrode area of the positive electrode for lithium secondary batteries was set to 1.65 cm$^2$.

<Production of Lithium Secondary battery (Coin Type Half Cell)>

The following operation was performed in a glove box under an argon atmosphere.
The positive electrode for lithium secondary batteries produced in <Production of Positive Electrode for Lithium Secondary Batteries> was placed on the lower lid of a part for coin type battery R2032 (manufactured by Hohsen Corp.) with the aluminum foil surface facing downward, and a separator (a porous layer made of polyethylene) was **placed thereon. 300 $\mu$1 of an electrolytic solution was injected thereinto. As the** electrolytic solution, an electrolytic solution prepared by dissolving, in a mixed solution of ethylene carbonate, dimethyl carbonate, and ethyl methyl carbonate in a ratio of 30:35:35 (volume ratio), LiPF$_6$ to achieve 1.0 mol/L was used.

Next, metal lithium was used as a negative electrode, and the negative electrode was placed on the upper side of the separator, covered with the upper lid via a gasket, and caulked by a caulking machine, whereby a lithium secondary battery (coin type half cell **R2032, hereinafter, sometimes referred to as "half cell") was produced.**

<Charge/Discharge Test>

Using the half cell produced in <Production of Lithium Secondary Battery (Coin Type Half Cell), an initial charge/discharge test was conducted under the following conditions. In the initial charge/discharge test, the initial charge/discharge efficiency was calculated from the initial discharge capacity with respect to the initial charge capacity by the following expression.

$$\text{Initial charge/discharge efficiency (\%)} =$$

$$\text{Initial discharge capacity (mAh/g)} / \text{initial charge capacity (mAh/g)} \times 100$$

<Charge/Discharge Test Conditions>

Test temperature: 25°C
Charging maximum voltage 4.3 V, charging current 0.2 CA, constant current constant voltage charging
Discharging minimum voltage 2.5 V, discharging current 0.2 CA, constant current discharging

«Example 1»

1. Manufacturing of Positive Electrode Active Material 1

After water was put into a reaction tank equipped with a stirrer and an overflow pipe, an aqueous solution of sodium hydroxide was added thereto, and the liquid was held at a temperature of 50°C.
An aqueous solution of nickel sulfate, an aqueous solution of cobalt sulfate, and an aqueous solution of manganese sulfate were mixed so that the atomic ratio of nickel atoms, cobalt atoms, and manganese atoms became 0.50:0.20:0.30, whereby a mixed raw material solution was prepared.
Next, the mixed raw material solution and an aqueous solution of ammonium sulfate as a complexing agent were continuously added into the reaction tank under stirring.
An aqueous solution of sodium hydroxide was appropriately added dropwise so that the pH of the solution in the reaction tank became 12.1 (value measured when the liquid temperature of the aqueous solution was 40°C) to obtain nickel cobalt manganese complex hydroxide particles.
Thereafter, the resultant washed, dehydrated by a centrifuge, isolated, and dried at 105°C.
The obtained dried powder was put into a jet mill set to a pulverization gas pressure of 0.8 MPa and pulverized to obtain a nickel cobalt manganese complex hydroxide 1.
The nickel cobalt manganese complex hydroxide 1 and lithium hydroxide monohydrate powder were weighed to achieve Li/(Ni + Co + Mn) = 1.05 and mixed.
Thereafter, the resultant was **calcined** at 1,030°C for 5 hours in an oxygen atmosphere to obtain a lithium metal complex oxide powder. The obtained lithium metal complex oxide powder was put into a pin mill operated at a rotation speed of 16,000 rpm and crushed to obtain a positive electrode active material 1.

2. Evaluation of Positive Electrode Active Material 1

Compositional analysis of the positive electrode active material 1 was performed, and when the composition was made to correspond to Composition Formula (I), x = 0.02, y = 0.200, z = 0.300, and w = 0 were obtained.
As a result of SEM observation of the positive electrode active material 1, the **average primary particle diameter (R1) was 2.0 $\mu$m, and as a result of crystal structure analysis, the average crystallite diameter (Ra) was 0.304 $\mu$m. The ratio (R1/Ra) of R1** to Ra was 6.6. The BET specific surface area was 0.60 m$^2$/g, $D_{10}$ was 2.6 $\mu$m, and the amount of residual lithium was 0.04 mass%. The initial charge/discharge efficiency of a coin type half cell using the positive electrode active material 1 was 85.6%.

«Example 2»

1. Manufacturing of Positive Electrode Active Material 2

A nickel cobalt manganese complex hydroxide 2 was obtained in the same manner as in Example 1 except that an aqueous solution of nickel sulfate, an aqueous solution of cobalt sulfate, and an aqueous solution of manganese sulfate were mixed so that the atomic ratio of nickel atoms, cobalt atoms, and manganese atoms became 0.60:0.20:0.20.
The nickel cobalt manganese complex hydroxide 2 and lithium hydroxide monohydrate powder were weighed to achieve Li/(Ni + Co + Mn) = 1.05 and mixed.
Thereafter, the resultant was calcined at 970°C for 5 hours in an oxygen atmosphere to obtain a lithium metal complex oxide powder.
The obtained lithium metal complex oxide powder was crushed by a pin mill at 16,000 rpm and sieved to obtain a positive electrode active material 2.

2. Evaluation of Positive Electrode Active Material 2

Compositional analysis of the positive electrode active material 2 was performed, and when the composition was made to correspond to Composition Formula (I), x = 0.02, y = 0.200, z = 0.200, and w = 0 were obtained.
As a result of SEM observation of the positive electrode active material 2, the **average primary particle diameter (R1) was 4.5 $\mu$m, and as a result of crystal structure analysis, the average crystallite diameter (Ra) was 0.266 $\mu$m. The ratio (R1/Ra) of R1** to **R**a was 16.9. The BET specific surface area was 0.71 $m^2/g$, **$D_{10}$ was 3.1 $\mu$m, and the** amount of residual lithium was 0.12 mass%. The initial charge/discharge efficiency of a coin type half cell using the positive electrode active material 2 was 86.1%.

«Example 3»

1. Manufacturing of Positive Electrode Active Material 3

A nickel cobalt manganese complex hydroxide 3 was obtained in the same manner as in Example 1 except that an aqueous solution of nickel sulfate, an aqueous solution of cobalt sulfate, and an aqueous solution of manganese sulfate were mixed so that the atomic ratio of nickel atoms, cobalt atoms, and manganese atoms became 0.55:0.21:0.24.
The nickel cobalt manganese complex hydroxide 3 and lithium hydroxide monohydrate powder were weighed to achieve Li/(Ni + Co + Mn) = 1.05 and mixed.
Thereafter, the resultant was calcined at 970°C for 5 hours in an oxygen atmosphere to obtain a lithium metal complex oxide powder.
The obtained lithium metal complex oxide powder was crushed by a pin mill operated at 16,000 rpm and sieved to obtain a positive electrode active material 3.

2. Evaluation of Positive Electrode Active Material 3

Compositional analysis of the positive electrode active material 3 was performed, and when the composition was made to correspond to Composition Formula (I), x = 0.02, y = 0.210, z = 0.240, and w = 0 were obtained.
As a result of SEM observation of the positive electrode active material 3, the **average primary particle diameter (R1) was 3.0 $\mu$m, and as a result of crystal structure analysis, the average crystallite diameter (Ra) was 0.267 $\mu$m. The ratio (R1/Ra) of R1** to Ra was 11.2. The BET specific surface area was 0.77 $m^2/g$, $D_{10}$ **was 2.3 $\mu$m, and the** amount of residual lithium was 0.06 mass%. The initial charge/discharge efficiency of a coin type half cell using the positive electrode active material 3 was 86.8%.

«Example 4»

1. Manufacturing of Positive Electrode Active Material 4

A nickel cobalt manganese complex hydroxide 4 was obtained in the same manner as in Example 1 except that an aqueous solution of nickel sulfate, an aqueous solution of cobalt sulfate, an aqueous solution of manganese sulfate, and an aqueous solution of zirconium sulfate were mixed so that the atomic ratio of nickel atoms, cobalt atoms, manganese atoms, and zirconium atoms became 0.547:0.199:0.249:0.050.
The nickel cobalt manganese complex hydroxide 4 and lithium hydroxide monohydrate powder were weighed to achieve Li/(Ni + Co + Mn + Zr) = 1.05 and mixed.

Thereafter, the resultant was calcined at 970°C for 5 hours in an oxygen atmosphere to obtain a lithium metal complex oxide powder.

The obtained lithium metal complex oxide powder was put into a pin mill operated at a rotation speed of 16,000 rpm and crushed to obtain a positive electrode active material 4.

2. Evaluation of Positive Electrode Active Material 4

Compositional analysis of the positive electrode active material 4 was performed, and when the composition was made to correspond to Composition Formula (I), x = 0.02, y = 0.199, z = 0.249, and w = 0.004 were obtained, and the kind of element M was Zr.

As a result of SEM observation of the positive electrode active material 4, the **average primary particle diameter (R1) was 2.5 $\mu$m, and as a result of crystal structure analysis, the average crystallite diameter (Ra) was 0.290 $\mu$m. The ratio (R1/Ra) of R1** to Ra was 8.6. The BET specific surface area was 0.72 $m^2$/g, $D_{10}$ **was 2.6 $\mu$m, and the** amount of residual lithium was 0.04 mass%. The initial charge/discharge efficiency of a coin type half cell using the positive electrode active material 4 was 86.5%.

«Example 5»

1. Manufacturing of Positive Electrode Active Material 5

A nickel cobalt manganese complex hydroxide 5 was obtained in the same manner as in Example 1 except that an aqueous solution of nickel sulfate, an aqueous solution of cobalt sulfate, and an aqueous solution of manganese sulfate were mixed so that the atomic ratio of nickel atoms, cobalt atoms, and manganese atoms became 0.88:0.08:0.04, and an aqueous solution of sodium hydroxide was appropriately added dropwise so that the pH of the solution in the reaction tank became 11.39 (value measured when the liquid temperature of the aqueous solution was 40°C) to obtain nickel cobalt manganese complex hydroxide particles.

The nickel cobalt manganese complex hydroxide 5 and lithium hydroxide monohydrate powder were weighed to achieve Li/(Ni + Co + Mn) = 1.26 and mixed.

Thereafter, the resultant was calcined at 790°C for 10 hours in an oxygen atmosphere to obtain a lithium metal complex oxide powder.

The obtained lithium metal complex oxide powder was put into a pin mill operated at a rotation speed of 16,000 rpm and crushed to obtain a positive electrode active material 5.

2. Evaluation of Positive Electrode Active Material 5

Compositional analysis of the positive electrode active material 5 was performed, and when the composition was made to correspond to Composition Formula (I), x = 0.02, y = 0.080, z = 0.04, and w = 0 were obtained.

As a result of SEM observation of the positive electrode active material 5, the **average primary particle diameter (R1) was 2.0 $\mu$mand as a result of crystal structure analysis, the average crystallite diameter (Ra) was 0.154 $\mu$m The ratio (R1/Ra) of R1** to Ra was 13.0. The BET specific surface area was 0.82 $m^2$/g, $D_{10}$ **was 2.6 $\mu$m, and the** amount of residual lithium was 0.06 mass%. The initial charge/discharge efficiency of a coin type half cell using the positive electrode active material 6 was 85.0%.

«Example 6»

1. Manufacturing of Positive Electrode Active Material 6

A positive electrode active material 2 was obtained in the same manner as in Example 2.

The obtained positive electrode active material 2 and $WO_3$ were mixed so that the ratio (W / (Ni + Co + Mn)) of the molar ratio of W to the sum of the molar ratios of Ni, Co, and Mn in the positive electrode active material 2 became 1.0 mol%.

The resultant was calcined in a dry air atmosphere at 760°C for 5 hours to obtain a positive electrode active material 6 having a coating material containing W as an element X on the surface of the lithium metal complex oxide powder.

2. Evaluation of Positive Electrode Active Material 6

When compositional analysis of the positive electrode active material 6 was performed, x = 0.02, y = 0.199, z = 0.198, and w = 0.009 were obtained, and the kind of element M was W.

As a result of SEM observation of the positive electrode active material 6, the **average primary particle diameter (R1) was 4.5 μmand as a result of crystal structure analysis, the average crystallite diameter (Ra) was 0.272 μm. The ratio (R1/Ra) of R1** to Ra was 16.5. The BET specific surface area was 0.73 m$^2$/g, D$_{10}$ **was 3.1 μm, and the** amount of residual lithium was 0.12 mass%. The initial charge/discharge efficiency of a coin type half cell using the positive electrode active material 6 was 86.8%.

«Example 7»

1. Manufacturing of Positive Electrode Active Material 7

A positive electrode active material 2 was obtained in the same manner as in Example 2. The obtained positive electrode active material 2 and Al$_2$O$_3$ were mixed so that the ratio (A1 / (Ni + Co + Mn)) of the molar ratio of Al to the sum of the molar ratios of Ni, Co, and Mn in the positive electrode active material 2 became 1.0 mol%. The resultant was calcined in a dry air atmosphere at 760°C for 5 hours to obtain a positive electrode active material 7 having a coating material containing Al as an element X on the surface of the lithium metal complex oxide powder.

2. Evaluation of Positive Electrode Active Material 7

When compositional analysis of the positive electrode active material 7 was performed, x = 0.02, y = 0.198, z = 0.198, and w = 0.010 were obtained, and the kind of element M was Al.

As a result of SEM observation of the positive electrode active material 7, the **average primary particle diameter (R1) was 4.5 μmand as a result of crystal structure analysis, the average crystallite diameter (Ra) was 0.273 μm. The ratio (R1/Ra) of R1** to Ra was 16.5. The BET specific surface area was 0.73 m$^2$/g, D$_{10}$ **was 3.2 μm, and the** amount of residual lithium was 0.13 mass%. The initial charge/discharge efficiency of a coin type half cell using the positive electrode active material 7 was 86.4%.

«Example 8»

1. Manufacturing of Positive Electrode Active Material 8

A positive electrode active material 2 was obtained in the same manner as in Example 2. The obtained positive electrode active material 2 and ZrO$_2$ were mixed so that the ratio (Zr / (Ni + Co + Mn)) of the molar ratio of Zr to the sum of the molar ratios of Ni, Co, and Mn in the positive electrode active material 2 became 1.0 mol%. The resultant was calcined in a dry air atmosphere at 760°C for 5 hours to obtain a positive electrode active material 8 having a coating material containing Zr as an element X on the surface of the lithium metal complex oxide powder.

2. Evaluation of Positive Electrode Active Material 8

When compositional analysis of the positive electrode active material 8 was performed, x = 0.02, y = 0.199, z = 0.198, and w = 0.009 were obtained, and the kind of element M was Zr.

As a result of SEM observation of the positive electrode active material 8, the **average primary particle diameter (R1) was 4.5 μm, and as a result of crystal structure analysis, the average crystallite diameter (Ra) was 0.264 μm. The ratio** (R1/Ra) **of R1** to Ra was 17.0. The BET specific surface area was 0.75 m$^2$/g, D$_{10}$ **was 3.1 μm, and the** amount of residual lithium was 0.12 mass%. The initial charge/discharge efficiency of a coin type half cell using the positive electrode active material 8 was 86.2%.

«Example 9»

1. Manufacturing of Positive Electrode Active Material 9

A positive electrode active material 2 was obtained in the same manner as in Example 2. The obtained positive electrode active material 2 and Nb$_2$O$_5$ were mixed so that the ratio (Nb / (Ni + Co + Mn)) of the molar ratio of Nb to the sum of the molar ratios of Ni, Co, and Mn in the positive electrode active material 2 became 1.0 mol%. The resultant was calcined in a dry air atmosphere at 760°C for 5 hours to obtain a positive electrode active material 9 having a coating material containing Nb as an element X on the surface of the lithium metal complex oxide powder.

2. Evaluation of Positive Electrode Active Material 9

When compositional analysis of the positive electrode active material 9 was performed, x = 0.02, y = 0.199, z = 0.198, and w = 0.009 were obtained, and the kind of element M was Nb.

As a result of SEM observation of the positive electrode active material 9, the **average primary particle diameter (R1) was 4.5 μm, and as a result of crystal structure analysis, the average crystallite diameter (Ra) was 0.268 μm. The ratio (R1/Ra) of R1 to Ra was 16.8.** The BET specific surface area was 0.72 m$^2$/g, $D_{10}$ **was 3.1 μm, and the** amount of residual lithium was 0.12 mass%. The initial charge/discharge efficiency of a coin type half cell using the positive electrode active material 9 was 87.0%.

«Comparative Example 1»

1. Manufacturing of Positive Electrode Active Material 10

Nickel cobalt manganese complex hydroxide particles were obtained in the same manner as in Example 1, washed, thereafter dehydrated by a centrifuge, isolated, and dried at 105°C to obtain a dry powder 1.
The dry powder 1 and lithium hydroxide monohydrate powder were weighed to achieve Li/(Ni + Co + Mn) = 1.05 and mixed.
Thereafter, the resultant was calcined at 1,000°C for 5 hours in an oxygen atmosphere to obtain a lithium metal complex oxide powder. The obtained lithium metal complex oxide powder was put into a pin mill operated at a rotation speed of 16,000 rpm and crushed to obtain a positive electrode active material 10.

2. Evaluation of Positive Electrode Active Material 10

Compositional analysis of the positive electrode active material 6 was performed, and when the composition was made to correspond to Composition Formula (I), x = 0.02, y = 0.200, z = 0.300, and w = 0 were obtained.
As a result of SEM observation of the positive electrode active material 10, the **average primary particle diameter (R1) was 1.5 μm, and as a result of crystal structure analysis, the average crystallite diameter (Ra) was 0.316 μm. The ratio (R1/Ra) of R1** to Ra was 4.7. The BET specific surface area was 0.61 m$^2$/g, **$D_{10}$ was 2.6 μm, and the** amount of residual lithium was 0.03 mass%. The initial charge/discharge efficiency of a coin type half cell using the positive electrode active material 10 was 82.9%.

«Comparative Example 2»

1. Manufacturing of Positive Electrode Active Material 11

Nickel cobalt manganese complex hydroxide particles were obtained in the same manner as in Example 4, washed, thereafter dehydrated by a centrifuge, isolated, and dried at 105°C to obtain a dry powder 2.
The dry powder 2 and lithium hydroxide monohydrate powder were weighed to achieve Li/(Ni + Co + Mn + Zr) = 1.05 and mixed.
Thereafter, the resultant was calcined at 1,030°C for 5 hours in an oxygen atmosphere to obtain a lithium metal complex oxide powder. The obtained lithium metal complex oxide powder was put into a pin mill operated at a rotation speed of 16,000 rpm and crushed to obtain a positive electrode active material 11.

2. Evaluation of Positive Electrode Active Material 11

Compositional analysis of the positive electrode active material 11 was performed, and when the composition was made to correspond to Composition Formula (I), x = 0.02, y = 0.199, z = 0.249, and w = 0.004 were obtained, and the kind of element M was Zr.
As a result of SEM observation of the positive electrode active material 11, the **average primary particle diameter (R1) was 8.5 μm, and as a result of crystal structure analysis, the average crystallite diameter (Ra) was 0.305 μm. The ratio (R1/Ra) of R1** to Ra was 27.9. The BET specific surface area was 0.38 m$^2$/g, $D_{10}$ **was 4.7 μm, and the** amount of residual lithium was 0.03 mass%. The initial charge/discharge efficiency of a coin type half cell using the positive electrode active material 7 was 80.5%.

[Table 1]

| | Li[Li$_x$(Ni$_{(1-y-z-w)}$Co$_y$Mn$_z$M$_w$)$_{1-x}$]O$_2$ | | | | | | Coating element | Average primary particle diameter (R1) | Average crystallite diameter (Ra) | R1/Ra | BET specific surface area | D10 | Amount of residual lithium | Initial charge/ discharge efficiency |
|---|---|---|---|---|---|---|---|---|---|---|---|---|---|---|
| | Li | Ni | Co | Mn | M | Element M | | (R1) | (Ra) | | | | | |
| | x | 1-v-z-w | y | z | w | | X | μm | μm | - | m²/g | μm | mass% | % |
| Example 1 | 0.02 | 0.500 | 0.200 | 0.300 | 0.000 | - | - | 2.0 | 0.304 | 6.6 | 0.60 | 2.6 | 0.04 | 85.6 |
| Example 2 | 0.02 | 0.600 | 0.200 | 0.200 | 0.000 | - | - | 4.5 | 0.266 | 16.9 | 0.71 | 3.1 | 0.12 | 86.1 |
| Example 3 | 0.02 | 0.550 | 0.210 | 0.240 | 0.000 | - | - | 3.0 | 0.267 | 11.2 | 0.77 | 2.3 | 0.06 | 86.8 |
| Example 4 | 0.02 | 0.548 | 0.199 | 0.249 | 0.004 | Zr | - | 2.5 | 0.290 | 8.6 | 0.72 | 2.6 | 0.04 | 86.5 |
| Example 5 | 0.02 | 0.880 | 0.080 | 0.040 | 0.000 | - | - | 2.0 | 0.154 | 13.0 | 0.82 | 2.6 | 0.06 | 85.0 |
| Example 6 | 0.02 | 0.594 | 0.199 | 0.198 | 0.009 | W | W | 4.5 | 0.272 | 16.5 | 0.73 | 3.1 | 0.12 | 86.8 |
| Example 7 | 0.02 | 0.594 | 0.198 | 0.198 | 0.010 | Al | Al | 4.5 | 0.273 | 16.5 | 0.73 | 3.2 | 0.13 | 86.4 |
| Example 8 | 0.02 | 0.594 | 0.199 | 0.198 | 0.009 | Zr | Zr | 4.5 | 0.264 | 17.0 | 0.75 | 3.1 | 0.12 | 86.2 |
| Example 9 | 0.02 | 0.594 | 0.199 | 0.198 | 0.009 | Nb | Nb | 4.5 | 0.268 | 16.8 | 0.72 | 3.1 | 0.12 | 87.0 |
| Comparative Example 1 | 0.02 | 0.500 | 0.200 | 0.300 | 0.000 | - | - | 1.5 | 0.316 | 4.7 | 0.61 | 2.6 | 0.03 | 82.9 |
| Comparative Example 2 | 0.02 | 0.548 | 0.199 | 0.249 | 0.004 | Zr | - | 8.5 | 0.305 | 27.9 | 0.38 | 4.7 | 0.03 | 80.5 |

EP 3 901 099 A1

As shown in the above results, Examples 1 to 9 to which the present invention was applied all had an initial charge/discharge efficiency of 85% or more, and had a higher initial charge efficiency than those of Comparative Examples 1 and 2.

[Reference Signs List]

1:   Separator
2:   Positive electrode
3:   Negative electrode
4:   Electrode group
5:   Battery can
6:   Electrolytic solution
7:   Top insulator
8:   Sealing body
10:   lithium secondary battery
21:   Positive electrode lead
31:   Negative electrode lead

**Claims**

1. A lithium metal complex oxide powder satisfying requirements (1) to (3):

   the requirement (1): Composition Formula (I) is satisfied;

$$Li[Li_x(Ni_{(1-y-z-w)}Co_yMn_zM_w)_{1,-x}]O_2 ... \qquad (I)$$

   (where M is one or more elements selected from the group consisting of Fe, Cu, Ti, Mg, Al, W, B, Mo, Nb, Zn, Sn, Zr, Ga, La, and V, and $-0.1 \leq x \leq 0.2$, $0 \leq y \leq 0.4$, $0 \leq z \leq 0.4$, and $0 \leq w \leq 0.1$ are satisfied)
   the requirement (2): an average primary particle diameter is 1 $\mu$m or more and 7 $\mu$m or less; and
   the requirement (3): R1/Ra, which is a ratio of the average primary particle diameter represented by R1 to an average crystallite diameter represented by Ra, is more than 5.0 and 20 or less.

2. The lithium metal complex oxide powder according to Claim 1,
   wherein a BET specific surface area of the lithium metal complex oxide powder is 0.1 m$^2$/g or more and 2.0 m$^2$/g or less.

3. The lithium metal complex oxide powder according to Claim 1 or 2,
   wherein a 10% cumulative volume particle size $D_{10}$ of the lithium metal complex oxide powder is 4 $\mu$m or less.

4. The lithium metal complex oxide powder according to any one of Claims 1 to 3,
   wherein an amount of residual lithium measured by a neutralization titration method is 0.3 mass% or less.

5. The lithium metal complex oxide powder according to any one of Claims 1 to 4, comprising:

   core particles; and
   a coating material that coats a surface of the core particles,
   wherein the coating material contains an element X,
   where the element X is one or more elements selected from the group consisting of Al, Ti, Zr, La, Nb, and W.

6. A positive electrode active material for lithium secondary batteries, comprising:
   the lithium metal complex oxide powder according to any one of Claims 1 to 5.

7. A positive electrode for lithium secondary batteries, comprising:
   the positive electrode active material for lithium secondary batteries according to Claim 6.

8. A lithium secondary battery comprising:

the positive electrode for lithium secondary batteries according to Claim 7.

## FIG. 1A

## FIG. 1B

## INTERNATIONAL SEARCH REPORT

International application No.

PCT/JP2019/050015

### A. CLASSIFICATION OF SUBJECT MATTER

Int. Cl. G01G53/00(2006.01)i, H01M4/36(2006.01)i, H01M4/505(2010.01)i, H01M4/525(2010.01)i
FI: C01G53/00 A, H01M4/525, H01M4/505, H01M4/36 C

According to International Patent Classification (IPC) or to both national classification and IPC

### B. FIELDS SEARCHED

Minimum documentation searched (classification system followed by classification symbols)

Int. Cl. C01G53/00, H01M4/36, H01M4/505, H01M4/525

Documentation searched other than minimum documentation to the extent that such documents are included in the fields searched

Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | WO 2015/182665 A1 (SUMITOMO CHEMICAL CO., LTD.) 03 December 2015, paragraphs [0014], [0038]-[0040], [0165]-[0173] | 1-4, 6-5 |
| Y | | 5 |
| X | WO 2016/060105 A1 (SUMITOMO CHEMICAL CO., LTD.) 21 April 2016, paragraphs [0019], [0034]-[0037], [0259]-[0264] | 1-4, 6-8 |
| Y | | 5 |
| Y | WO 2018/047946 A1 (FUJIFILM CORP.) 15 March 2018, paragraph [0087] | 5 |
| Y | WO 2018/221442 A1 (SUMITOMO CHEMICAL CO., LTD.) 06 December 2018, paragraphs [0052]-[0059] | 5 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19.02.2020 | 03.03.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT
Information on patent family members

| | International application No. |
|---|---|
| | PCT/JP2019/050015 |

| Patent Documents referred to in the Report | Publication Date | Patent Family | Publication Date |
|---|---|---|---|
| WO 2015/182665 A1 | 03.12.2015 | US 2017/0187031 A1 paragraphs [0014], [0049]-[0052], [0202]-[0211] EP 3151316 A1 KR 10-2017-0009876 A CN 106463721 A | |
| WO 2016/060105 A1 | 21.04.2016 | US 2017/0237069 A1 paragraphs [0024], [0047]-[0050], [0306]-[0311] EP 3208872 A1 KR 10-2017-0057450 A CN 107078293 A KR 10-2019-0026061 A | |
| WO 2018/047946 A1 | 15.03.2018 | US 2019/0207253 A1 paragraph [0160] CN 109690834 A | |
| WO 2018/221442 A1 | 06.12.2018 | JP 2018-206750 A JP 2018-206775 A JP 6368022 B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018238844 A
- JP 2019088342 A
- JP 2014149962 A
- JP 2002201028 A